(19) Europäisches Patentamt

European Patent Office

Office européen des brevets

(11) EP 0 609 888 B1

(12) EUROPEAN PATENT SPECIFICATION

(45) Date of publication and mention
of the grant of the patent:
**17.06.1998  Bulletin 1998/25**

(51) Int Cl.$^6$: **C04B 35/00**, C04B 35/42,
C04B 35/50

(21) Application number: **94101667.7**

(22) Date of filing: **03.02.1994**

(54) **Semiconductive ceramics having negative temperature coefficient of resistance**

Halbleitende Keramikmaterialien mit negativem Temperaturkoeffizienten des Widerstands

Céramique semi-conductrice à coefficient de température négatif de la résistance

(84) Designated Contracting States:
**DE FR GB**

(30) Priority: **05.02.1993  JP  18997/93**
**26.02.1993  JP  38328/93**
**04.11.1993  JP  275443/93**

(43) Date of publication of application:
**10.08.1994  Bulletin 1994/32**

(73) Proprietor: **MURATA MANUFACTURING CO., LTD.**
**Nagaokakyo-shi, Kyoto 617 (JP)**

(72) Inventors:
• **Ishikawa, Terunobu c/o Murata Manufacturing
Co Ltd
Nagaokakyo-shi, Kyoto (JP)**
• **Nakayama, Akinori c/o Murata Manufacturing Co
Ltd
Nagaokakyo-shi, Kyoto (JP)**
• **Niimi, Hideaki c/o Murata Manufacturing Co Ltd
Nagaokakyo-shi, Kyoto (JP)**
• **Kittaka, Toshihiko c/o Murata Manufacturing Co
Ltd
Nagaokakyo-shi, Kyoto (JP)**
• **Takagi, Hiroshi c/o Murata Manufacturing Co Ltd
Nagaokakyo-shi, Kyoto (JP)**
• **Tomono, Kunisaburo c/o Murata Manufacturing
Co Ltd
Nagaokakyo-shi, Kyoto (JP)**

(74) Representative: **Schoppe, Fritz, Dipl.-Ing.
Schoppe & Zimmermann
Patentanwälte
Postfach 71 08 67
81458 München (DE)**

(56) References cited:
**EP-A- 0 395 400       EP-A- 0 467 590**
**EP-A- 0 623 569       EP-A- 0 626 356**
**DE-A- 2 824 408       JP-A- 1 290 549**
**JP-A- 5 612 580       US-A- 4 013 592**
**US-A- 4 062 932**

• **PATENT ABSTRACTS OF JAPAN vol. 11, no. 13
(C-397)14 January 1987 & JP-A-61 187 938
(MATSUSHITA) 21 August 1986**

## Description

The present invention relates to semiconductive ceramics having negative temperature cofficient of resistance.

In general, an element for preventing an inrush current is prepared from an element (NTC element) having negative temperature cofficient of resistance, whose electric resistance value decreases with a rise in temperature. This NTC element suppresses an inrush current due to a high resistance value at the room temperature, and thereafter increases in temperature and decreases in resistance by self heating, to reduce power consumption in a stationary state.

In a switching power source, for example, an inrush current flows at the instant when a switch is turned on, and hence the so-called NTC element is employed for absorbing such an initial rush current. When the switch is turned on, therefore, the NTC element suppresses the inrush current. The NTC element thereafter increases in temperature and decreases in resistance by self heating, to reduce power consumption in a stationary state.

When a toothed wheel of a gear which is so formed that supply of lubricating oil is started upon starting of a motor is immediately rotated at a high speed by the motor, the lubricating oil is so insufficiently supplied that the toothed wheel may be damaged. When a lapping machine which is employed for grinding a surface of ceramics by rotating a grindstone is rotated at a high speed immediately upon starting of a driving motor, on the other hand, the ceramics may be cracked.

In order to solve each of the aforementioned problems, it is necessary to delay the starting of the motor for a constant period. The NTC element is employed as an element for delaying the starting of the motor in such a manner.

The NTC element reduces a terminal voltage of the motor in starting, whereby it is possible to delay the starting of the motor. Thereafter the NTC element increases in temperature and decreases in resistance by self heating, so that the motor is normally rotated in a stationary state.

The aforementioned element for preventing an inrush current or delaying motor starting is generally formed by an NTC element which is prepared from a transition metal oxide having a spinel structure.

However, the conventional NTC element has such a disadvantage that the rate of reduction in resistance (constant B) caused by a temperature rise cannot be more than 3200K. Therefore, the resistance value of the NTC element cannot be sufficiently reduced in a high-temperature state, and hence power consumption inevitably increases in a stationary state. When the NTC element is in the form of a disk, for example, the resistance value in a high-temperature can be sufficiently reduced by enlarging its diameter or making its thickness thinner. However, such a countermeasure is contradictory to requirement for miniaturization of an electronic component. Further, there are limits to thinning to satisfy the strength.

In relation to an improvement in this point, known is a multilayer NTC element which is prepared by stacking a plurality of ceramics layers with interposition of a plurality of internal electrodes and forming a pair of external electrodes on side surfaces of the laminate for alternately electrically connecting the internal electrodes with the pair of external electrodes.

However, the internal electrodes which are opposed to each other are so close to each other that the multilayer NTC element may be broken by a current exceeding several amperes.

The inventors have made various composition experiments and practical tests to deeply study materials showing negative temperature cofficient of resistance, and noted oxides of rare earth transition elements. The rare earth transition element oxides have such characteristics that B constants increase and specific resistance decrease with temperature rises. Such characteristics are described in literature (Phys. Rev. B6, [3] 1021 (1972)) by V. G. Bhide and D. S. Rajoria.

Although these rare earth transition element oxides exhibit small resistance value at a high temperature as compared with the conventional transitional metal oxides having a spinel structure, the same exhibit small B constant, with no provision of practical and meritorious effects.

US-A-4,013,592 relates to a high temperature thermistor composition which comprises a spinel-type $MgAl_2O_4$ and perovskite-type $LaCrO_3$ or $(La,Sr)CrO_3$. The composition is usable for the temperature range from 400°C to 600°C. Further, a high temperature thermistor composition is disclosed which comprises spinel-type solid solution $Mg(Al, Cr)_2O_4$ and perovskite-type solid solution $(La,Sr)CrO_3$ or $LaCrO_3$. Such a composition is usable for a higher temperature range of up to 1000°C.

EP-A-0623569 relates to a ceramic composition for a thermistor element. The composition is used for a thermistor exhibiting a stable resistance value over a wide temperature range and is capable of being used for a prolonged time. The composition is represented by the formula $(M^1M^2O_2)_{1-x} \cdot M^1AlO_3)_x$ wherein $M^1$ is an element selected from the elements of the group 3A excluding La and $M^2$ is an element of the groups 4A, 5A, 6A, 7A and 8. The composition may be $YCrO_3$ to which 1 weight percent $SiO_2$ is added.

EP-A-0626356 concerns a ceramic composition of the formula $(M^1_{1-x} \cdot N^1_x)(P^2_{1-y-x} \cdot N^2_y \cdot Al_z)O_3$ where $M^1$ is one or more selected from the group 3A elements of the periodic table excluding La, $N^1$ is one or more selected from the group 2A elements of the periodic table, $P^2$ is one or more selected from the elements from the groups 4A, 5A, 6A, 7A and 8 of the periodic table whose oxides exhibit p-characteristics, and $N^2$ is one or more selected from the elements of the groups 4A, 5A, 6A, 7A and 8 whose oxides exhibit n-characteristics. The composition may be $Y(Cr_{0.6}Fe_{0.2}Al_{0.2})O_3$ to which $SiO_2$ is added.

JP-A-56125803 concerns a thermistor having a ceramic resistance body consisting of $LaCo_{1-x}V_xO_3$ in which x is 0.05-0.4. The ceramic contains an oxide of a rare earth element ($La_2O_3$) and oxides of transition elements (CoO and $V_2O_5$).

JP-A-1290549 concerns an oxide semiconductor composition for a negative temperature coefficient thermistor. This composition mainly contains an oxide of a rare earth element (La) and oxides for transition elements (Co,Mn).

It is the object of the present invention to provide semiconductive ceramics having negative temperature coefficients of resistance with low resisitivity and a high B constant in a stationary state, to enable feeding of a heavy current.

This object is achieved by semiconductive ceramics according to claim 1 and claim 2.

The rare earth transmission element oxide, such as $LaCoO_3$ or $SmNiO_3$, is not restricted in particular. $LaCoO_3$ exhibits such practical characteristics that its B constant extremely increases with a temperature rise, with high resistivity at the room temperature. Among rare earth elements, Ce is excluded since it is difficult to obtain an oxide with a transition metal. On the other hand, Y is included in the group of rare earth elements in the present invention since this element can attain characteristics and effects which are similar to those of the rare earth elements.

According to the present invention, 0.001 to 5 mole percent of the aforementioned additive is added to the main component.

It is possible to obtain a high B constant by adding at least 0.001 mole percent of at least one of Si, Zr, Hf, Ta, Sn, Sb, W, Mo, Te and Ce to the main component of a rare earth transition element oxide, since the resistance value at a room temperature can be increased with maintaining low resistance value at a high temperature. If the content of the additive exceeds 10 mole percent, however, the B constant at a high temperature is reduced below that of an NTC element which is composed of a transition metal oxide having a spinel structure. The content of the additive is set in a range of 0.001 to 5 mole percent.

As to the rare earth transition element oxide, the mole ratio of the rare earth element to the transition element is not restricted to 1:1 but may be varied. Even if the mole ratio is varied within a range of 0.6 to 1.1, it is possible to obtain a B constant which is substantially identical to that obtained at the mole ratio of 1:1. If the mole ratio is less than 0.6 or in excess of 1.1, however, power consumption in a stationary state so increases that the semiconductive ceramics cannot be applied to a circuit which is supplied with a heavy current, since the resistance value will not decrease upon a temperature rise.

As hereinabove described, the inventive semiconductive ceramics having negative temperature coefficient of resistance is composed of a rare earth transition element oxide with addition of a prescribed element, whereby it is possible to obtain an element having a high B constant at a high temperature, since the resistance value at room temperature can be increased with maintaining low resistance value at a high temperature. Therefore, it is possible to sufficiently reduce the resistance value in a temperature rise state for reducing power consumption in a stationary state, so that the element can be applied to a circuit which is supplied with a heavy current.

Thus, the semiconductive ceramics according to the present invention is applicable to an NTC element for preventing an inrush current in a switching power source which is supplied with a heavy current, or that for delaying motor starting.

While the semiconductive ceramics having negative temperature cofficient of resistance according to the present invention is applied to an element for preventing a rush current or that for delaying motor starting, the present invention is not restricted to such application.

The foregoing and other objects, features, aspects and advantages of the present invention will become more apparent from the following detailed description of the present invention when taken in conjunction with the accompanying drawings.

Fig. 1 is a characteristic diagram showing results of a test which was made by series-connecting an NTC element to a switching power source and measuring time change of a switching power source current upon power supply at a temperature of 25°C; and

Fig. 2 is a characteristic diagram showing relation between the number of times of a repetitive energization test and resistance values at a temperature of 25°C.

## DESCRIPTION OF THE PREFERRED EMBODIMENTS

(Example 1)

This Example was carried out on a rare earth transition element oxide of $LaCoO_3$.

First, $LaCoO_3$ powder materials were prepared in the following manner: Respective powder materials of $Co_3O_4$ and $La_2O_3$ were weighed so that La was at a mole ratio of 0.95 to Co. Prescribed amounts of additives shown in Tables 1, 2 and 3 were added to the powder materials, which in turn were wet-blended for 16 hours in ball mills employing nylon balls. Thereafter the powder materials were dehydrated, dried and calcined at 1000°C for 2 hours. Referring to Table 1, asterisked (*) amounts are out of the scope of the present invention.

Thus obtained calcined powder materials were pulverized by jet mills. Binders were added to the powder materials, which in turn were again wet-blended for 5 hours in ball mills employing nylon balls, filtered, dried and thereafter pressure-molded into the form of disks. The disks were fired in the atmosphere at 1400°C for 2 hours, to obtain sintered bodies. Both major surfaces of the sintered bodies were coated with platinum paste by screen printing, and baked at 1000°C for 2 hours, to be provided with electrodes. NTC elements were thus obtained.

The NTC elements were subjected to measurement of electric characteristics of specific resistance values and B constants. Tables 1 to 3 as well as Tables 4 to 9 described later show resistivity values which were measured at a temperature of 25°C. Assuming that $\rho(T)$ and $\rho(T_0)$ represent resistivity values at temperatures T and $T_0$ respectively and ln represents a natural logarithm, each B constant, which is a constant showing resistance change caused by temperature change, is defined as follows:

$$B(T) = [\ln\rho(T_0) - \ln\rho(T)]/(1/T_0 - 1/T)$$

Temperature change caused by the temperature increases with this value.

Referring to Tables 1, 2 and 3, the B constants at -10°C and 140°C are defined as follows:

$$B \text{ constant } (-10°C) = [\ln\rho(-10°C) - \ln\rho(25°C)]/[1/(-10 + 273.15) - 1/(25 + 273.5)]$$

$$B \text{ constant } (140°C) = [\ln\rho(25°C) - \ln\rho(140°C)]/[1/(25 + 273.15) - 1/(140 + 273.5)]$$

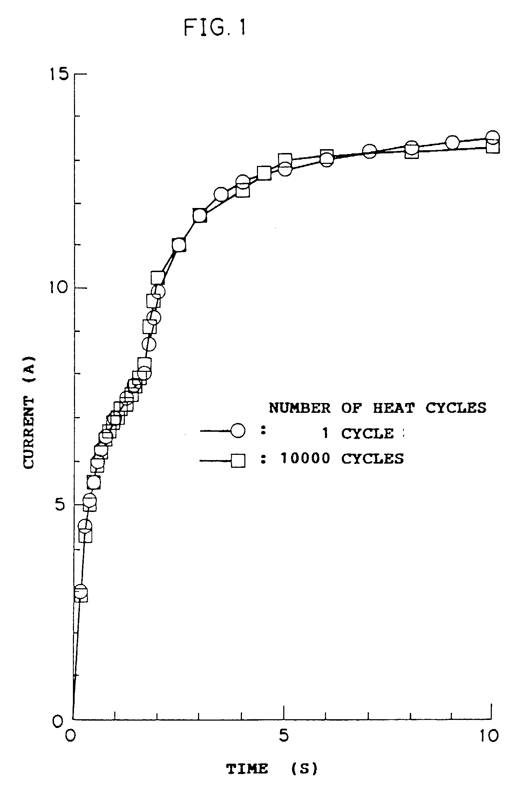

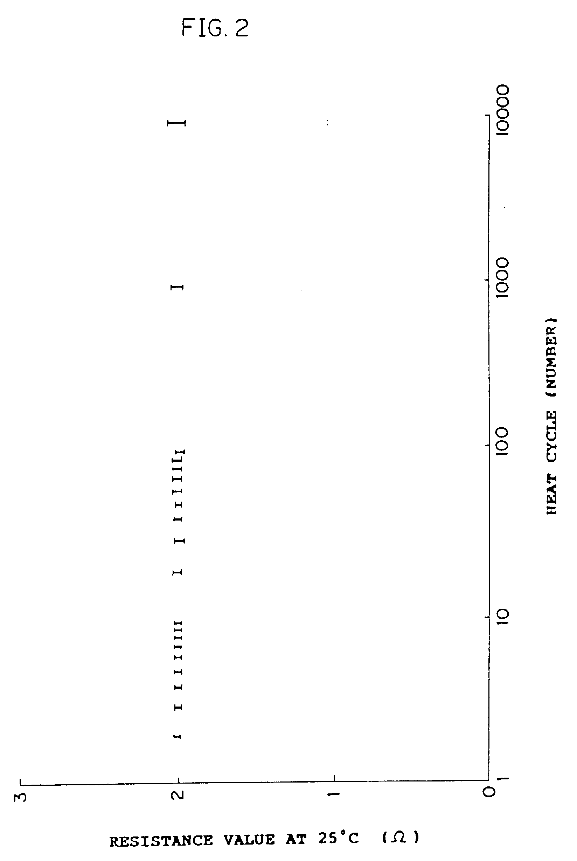

Figs. 1 and 2 show results of a repetitive energization test which was made on a sample according to Example 1, containing 1 mole percent of Zr. Fig. 1 shows the results of the test which was made by series-connecting an NTC element to a switching power source and measuring the time change of the switching power source current upon power supply at a temperature of 25°C. Fig. 2 is a characteristic diagram showing relation between the number of times of the repetitive energization test and resistance values at a temperature of 25°C. In this repetitive energization test, the NTC element was energized with a current for 1 minute and thereafter the power source was turned off for 30 minutes to cool the element to 25°C every cycle. As clearly understood from Figs. 1 and 2, no characteristic change was recognized even after 10000 cycles. Further, no NTC element was broken when currents of 200 A were continuously applied to 100 NTC elements. Thus, it was confirmed that the inventive NTC element is applicable to a heavy current.

Table 1

| No. | Additional Element | Content (mol%) | Resistivity (Ω·cm) | B Constant (-10°C) (K) | B Constant (140°C) (K) |
|-----|-----|-----|-----|-----|-----|
| 1-1 | Zr | 0 * | 4.9 | 520 | 1590 |
| 1-2 | Zr | 0.000* | 8.4 | 890 | 2510 |
| 1-3 | Zr | 0.001 | 11.1 | 1220 | 3020 |
| 1-4 | Zr | 0.01 | 14.8 | 1650 | 3780 |
| 1-5 | Zr | 0.1 | 18.7 | 2150 | 4480 |
| 1-6 | Zr | 1 | 19.8 | 2620 | 4730 |
| 1-7 | Zr | 10* | 13.6 | 1600 | 3290 |
| 1-8 | Zr | 20* | 4.7 | 790 | 1790 |

Table 2

| No. | Addtional Element | Content (mol%) | Resistivity (Ω·cm) | B Constant (-10°C) (K) | B Constant (140°C) (K) |
|-----|-----|-----|-----|-----|-----|
| 1-9 | Si | 0.05 | 17.4 | 2010 | 4290 |

Table 2   (continued)

| No. | Addtional Element | Content (mol%) | Resistivity (Ω·cm) | B Constant (-10°C) (K) | B Constant (140°C) (K) |
|-----|-------------------|----------------|--------------------|-----------------------|------------------------|
| 1-10 | Mo | 0.05 | 16.7 | 1820 | 4580 |
| 1-11 | Sn | 0.5 | 20.5 | 2400 | 4680 |
| 1-12 | Sb | 1 | 17.3 | 1970 | 4450 |
| 1-13 | Te | 1 | 20.2 | 2630 | 4530 |
| 1-14 | Hf | 5 | 18.4 | 2260 | 4310 |
| 1-15 | Ta | 5 | 17.5 | 2100 | 4570 |
| 1-16 | W | 10* | 16.4 | 1990 | 4320 |
| 1-17 | Ce | 10* | 17.0 | 2090 | 4480 |

Table 3

| No . | Additional Element : | Content (mol%) | Resistivity (Ω·cm) | B Constant (-10°C) (K) | B Constant (140°C (K) |
|------|----------------------|----------------|--------------------|-----------------------|------------------------|
| 1-18 | Zr | 0.05 | 19.6 | 2280 | 4230 |
|      | Mo | 0.05 | | | |
| 1-19 | Zr | 1 | 18.3 | 2570 | 4550 |
|      | Sn | 0.5 | | | |
| 1-20 | Zr | 0.05 | 17.8 | 2130 | 4510 |
|      | Sn | 0.05 | | | |
|      | W | 0.05 | | | |
| 1-21 | Zr | 1 | 16.2 | 2460 | 4290 |
|      | Mo | 0.5 | | | |
|      | Ce | 0.5 | | | |

(Example 2)

This Example was carried out on a rare earth transition element oxide of $SmNiO_3$.

First, $SmNiO_3$ powder materials were prepared in the following manner: Respective powdery materials of $Sm_2O_3$ and NiO were weighed so that Sm was at a mole ratio of 0.95 to Ni. Additives shown in Table 4 were added to the weighed powder materials, which in turn were wet-blended for 16 hours in ball mills employing nylon balls. Thereafter the powder materials were dehydrated, dried and calcined at 1000°C for 2 hours.

Then, the calcined powder materials were treated similarly to Example 1, to obtain NTC elements.

Table 4 also shows results of respective electric characteristics of thus obtained NTC elements, which were measured similarly to Example 1.

Table 4

| No. | Additional Element | Content (mol%) | Resistivity (Ω·cm) | B Constant (K) | B Constant (-10°C) (140°C) (K) |
|-----|--------------------|----------------|--------------------|----------------|-------------------------------|
| 3-1 | Zr | 0.05 | 14.8 | 2240 | 3920 |
| 3-2 | Mo | 0.05 | 14.0 | 2340 | 3870 |
| 3-3 | Sb | 1 | 13.8 | 2290 | 3790 |
| 3-4 | Hf | 1 | 12.1 | 2150 | 3740 |

Table 4 (continued)

| No. | Additional Element | Content (mol%) | Resistivity (Ω·cm) | B Constant (K) | B Constant (-10°C) (140°C) (K) |
|-----|-----|-----|-----|-----|-----|
| 3-5 | Ta | 0.5 | 14.3 | 2230 | 3800 |
| 3-6 | W | 0.5 | 15.0 | 2090 | 3750 |
| 3-7 | Sb | 0.5 | 12.9 | 2410 | 3930 |
|  | Ce | 0.5 |  |  |  |
| 3-8 | Zr | 0.05 | 14.3 | 2060 | 3620 |
|  | Ta | 0.05 |  |  |  |
| 3-9 | Sn | 1 | 12.0 | 2220 | 3890 |
|  | W | 1 |  |  |  |
| 3-10 | Si | 0.1 | 13.7 | 2390 | 3990 |
|  | Mo | 0.1 |  |  |  |
|  | W | 0.1 |  |  |  |

(Example 3)

This Example was carried out on a rare earth transition element oxide of NdNiO$_3$.

First, NdNiO$_3$ powder materials were prepared in the following manner: Respective powder materials of Nd$_2$O$_3$ and NiO were weighed so that Nd was at a mole ratio of 0.95 to Ni. Additives shown in Table 5 were added to the weighed powder materials, which in turn were wet-blended for 16 hours in ball mills employing nylon balls. Thereafter the powder materials were dehydrated, dried and calcined at 1000°C for 2 hours.

Then, the calcined powder materials were treated similarly to Example 1, to obtain NTC elements.

Table 5 also shows results of respective electric characteristics of the obtained NTC elements, which were measured similarly to Example 1.

Table 5

| No . | Additional Element | Content (mol%) | Resistivity (Ω·cm) | B Constant (-10°C) (K) | B Constant (140°C) (K) |
|-----|-----|-----|-----|-----|-----|
| 4-1 | Si | 0.5 | 24.3 | 2030 | 3860 |
| 4-2 | Zr | 0.5 | 24.0 | 2170 | 3790 |
| 4-3 | Mo | 5 | 25.8 | 2100 | 3910 |
| 4-4 | Sn | 5 | 24.1 | 2090 | 3730 |
| 4-5 | Sb | 1 | 23.6 | 2160 | 3850 |
| 4-6 | Ce | 1 | 22.6 | 2240 | 3930 |
| 4-7 | Si | 1 | 25.9 | 2120 | 3710 |
|  | Sn | 1 |  |  |  |
| 4-8 | Zr | 0.5 | 25.4 | 1990 | 3790 |
|  | W | 0.5 |  |  |  |
| 4-9 | Mo | 0.5 | 24.3 | 1970 | 3860 |
|  | Ta | 0.5 |  |  |  |
| 4-10 | Zr | 0.1 | 24.6 | 2080 | 3900 |
|  | Sn | 0.1 |  |  |  |
|  | Ta | 0.1 |  |  |  |

(Example 4)

This Example was carried out on a rare earth transition element oxide of $PrNiO_3$.

First, $PrNiO_3$ powder materials were prepared in the following manner: Respective powder materials of $Pr_6P_{11}$ and NiO were weighed so that Pr was at a mole ratio of 0.95 to Ni. Additives shown in Table 6 were added to the weighed powder materials, which in turn were wet-blended for 16 hours in ball mills employing nylon balls. Thereafter the powder materials were dehydrated, dried and calcined at 1000°C for 2 hours.

Then, the calcined powder materials were treated similarly to Example 1, to obtain NTC elements.

Table 6 also shows results of respective electric characteristics of the obtained NTC elements, which were measured similarly to Example 1.

Table 6

| No . | Additional Element | Content (mol%) | Resistivity ($\Omega\cdot$cm) | B Constant (-10°C) | B Constant (140°C) (K) (K) |
|---|---|---|---|---|---|
| 5-1 | Zr | 1 | 10.6 | 1960 | 3650 |
| 5-2 | Mo | 1 | 9.8 | 2100 | 3590 |
| 5-3 | Sb | 0.5 | 11.6 | 2060 | 3710 |
| 5-4 | Te | 0.5 | 8.9 | 1980 | 3690 |
| 5-5 | Ta | 0.05 | 10.3 | 2030 | 3740 |
| 5-6 | W | 0.05 | 12.0 | 2210 | 3820 |
| 5-7 | Zr | 1 | 9.7 | 2120 | 3640 |
|  | Hf | 1 |  |  |  |
| 5-8 | Zr | 0.5 | 9.6 | 1990 | 3630 |
|  | W | 0.1 |  |  |  |
| 5-9 | Mo | 0.1 | 11.3 | 1970 | 3670 |
|  | Sb | 0.1 |  |  |  |
| 5-10 | Sb | 0.5 | 10.2 | 2090 | 3710 |
|  | Hf | 0.5 |  |  |  |
|  | W | 0.5 |  |  |  |

(Example 5)

This Example was carried out on a rare earth transition element oxide of $La_{0.9}Nd_{0.1}CoO_3$.

First, respective powder materials of $La_2O_3$, $Nd_2O_3$ and $Co_3O_4$ were weighed to obtain $La_{0.2}Nd_{0.1}CoO_3$ semiconductive ceramic materials. Additives shown in Table 7 were added to the weighed powder materials, which in turn were wet-blended for 16 hours in ball mills employing nylon balls. Thereafter the powder materials were dehydrated, dried and calcined at 1000°C for 2 hours.

Then, the calcined powder materials were treated similarly to Example 1, to obtain NTC elements.

Table 7 also shows results of respective electric characteristics of thus obtained NTC elements, which were measured similarly to Example 1.

Table 7

| No. | Additional Element | Content (mol%) | Resistivity ($\Omega\cdot$cm) | B Constant (-10°C) (K) | B Constant (140°C) (K) |
|---|---|---|---|---|---|
| 6-1 | Zr | 0.5 | 26.1 | 1870 | 3630 |
| 6-2 | Sb | 1 | 25.7 | 1720 | 3690 |
| 6-3 | W | 5 | 26.4 | 1910 | 3590 |

Table 7   (continued)

| No. | Additional Element | Content (mol%) | Resistivity ($\Omega\cdot$cm) | B Constant (-10°C) (K) | B Constant (140°C) (K) |
|---|---|---|---|---|---|
| 6-4 | Si | 1 | 24.0 | 1860 | 3540 |
| | Hf | 1 | | | |
| 6-5 | Zr | 0.5 | 25.6 | 1790 | 3680 |
| | Mo | 0.5 | | | |
| | Ta | 0.5 | | | |

(Example 6)

This Example was carried out on a rare earth transition element oxide of $La_{0.9}Gd_{0.1}CoO_3$.

First, respective powder materials of $La_2O_3$, $Gd_2O_3$ and $Co_3O_4$ were weighed to obtain $La_{0.2}Gd_{0.1}CoO_3$ semiconductive ceramic materials. Additives shown in Table 8 were added to the weighed powder materials, which in turn were wet-blended for 16 hours in ball mills employing nylon balls. Thereafter the powder materials were dehydrated, dried and calcined at 1000°C for 2 hours.

Then, the calcined powder materials were treated similarly to Example 1, to obtain NTC elements.

Table 8 also shows results of respective electric characteristics of thus obtained NTC elements, which were measured similarly to Example 1.

Table 8

| No. | Additional Element | Content (mol%) | Resistivity ($\Omega\cdot$cm) | B Constant (-10°C) (K) | B Constant (140°C) (K) |
|---|---|---|---|---|---|
| 7-1 | Sn | 0.01 | 22.0 | 2010 | 3750 |
| 7-2 | Ta | 0.5 | 21.9 | 1960 | 3710 |
| 7-3 | Ce | 1 | 23.7 | 1840 | 3860 |
| 7-4 | Zr | 0.1 | 22.4 | 2020 | 3650 |
| | Mo | 0.1 | | | |
| 7-5 | Zr | 0.5 | 23.7 | 1970 | 3700 |
| | Te | 0.5 | | | |
| | Hf | 0.5 | | | |

(Example 7)

This Example was carried out on a rare earth transition element oxide of $La_{0.99}Y_{0.01}NnO_3$.

First, respective powder materials of $La_2O_3$, $Y_2O_3$ and MnO were weighed to obtain $La_{0.99}Y_{0.1}NnO_3$ semiconductive ceramic materials. Additives shown in Table 9 were added to the weighed powder materials, which in turn were wet-blended for 16 hours in ball mills employing nylon balls. Thereafter the powder materials were dehydrated, dried and calcined at 1000°C for 2 hours.

Then, the calcined powder materials were treated similarly to Example 1, to obtain NTC elements.

Table 9 also shows results of respective electric characteristics of thus obtained NTC elements, which were measured similarly to Example 1.

Table 9

| No. | Additional Element | Content (mol%) | Resistivity ($\Omega\cdot$cm) | B Constant (-10°C) (K) | B Constant (140°C) (K) |
|---|---|---|---|---|---|
| 8-1 | Sn | 5 | 20.6 | 2190 | 3970 |
| 8-2 | Mo | 1 | 21.5 | 2290 | 3860 |
| 8-3 | W | 0.5 | 19.7 | 2200 | 3900 |

Table 9   (continued)

| No . | Additional Element | Content (mol%) | Resistivity (Ω·cm) | B Constant (-10°C) (K) | B Constant (140°C) (K) |
|---|---|---|---|---|---|
| 8-4 | Sb | 0.5 | 20.1 | 2260 | 3840 |
|  | Ta | 0.5 |  |  |  |
| 8-5 | Zr | 1 | 20.6 | 2270 | 3820 |
|  | Sb | 1 |  |  |  |
|  | Mo | 1 |  |  |  |

Although the aforementioned Examples were carried out on oxides of LaCoO$_3$, SmNiO$_3$, NdNiO$_3$ and PrNiO$_3$ respectively, the present invention is also applicable to other rare earth transition element oxides, to attain similar effects.

Claims

1. Semiconductive ceramics having negative temperature coefficient of resistance, being mainly composed of an oxide which contains as main ingredients a rare earth material of the group IIIa excluding Ce and including Y and a transition element excluding Cr, with addition of at least one of Si, Zr, Hf, Ta and Ce in a range of 0.001 to 5 mole percent.

2. Semiconductive ceramics having negative temperature coefficient of resistance, being mainly composed of an oxide which contains as main ingredients a rare earth material of the group IIIa excluding Ce and including Y and a transition element excluding Cr, with addition of at least one of Sn, Sb, W, Mo or Te in a range of 0.001 to 5 mole percent.

3. Semiconductive ceramics having negative temperature coefficient of resistance in accordance with claim 1 or 2, wherein said oxide is at least one selected from LaCoO$_3$, LaMnO$_3$, SmNiO$_3$, NdNiO$_3$ and PrNiO$_3$.

4. Semiconductive ceramics having negative temperature coefficient of resistance in accordance with claim 1 or 2, wherein 0.1 to 5 mole percent of said additive is added to said main component.

5. Semiconductive ceramics having negative temperature coefficient resistance in accordance with claim 3, wherein said oxide of LaCoO$_3$ is La$_{0.9}$Nd$_{0.1}$CoO$_3$.

6. Semiconductive ceramics having negative temperature coefficient of resistance in accordance with claim 3, wherein said oxide of LaCoO$_3$ is La$_{0.9}$Gd$_{0.1}$CoO$_3$.

7. Semiconductive ceramics having negative temperature coefficient of resistance in accordance with claim 3, wherein said oxide of LaCoO$_3$ is La$_{0.99}$Y$_{0.01}$CoO$_3$.

8. Semiconductive ceramics having negative temperature coefficient of resistance in accordance with claim 1 or 2, being applied to an element for preventing a rush current.

9. Semiconductive ceramics having negative temperature coefficient of resistance in accordance with claim 1 or 2, being applied to an element for delaying motor starting.

Patentansprüche

1. Halbleitende Keramik mit einem negativen Widerstandstemperaturkoeffizienten, die hauptsächlich aus einem Oxid besteht, das als Hauptbestandteile ein seltenes Erdmaterial der Gruppe IIIa, ausschließlich Ce und einschließlich Y, und ein Übergangselement, ausschließlich Cr, enthält, mit einem Zusatz von zumindest einem der Elemente Si, Zr, Hf, Ta und Ce in einem Bereich von 0,001 bis 5 Mol-Prozent.

**2.** Halbleitende Keramik mit einem negativen Widerstandstemperaturkoeffizenten, die hauptsächlich aus einem Oxid besteht, das als Hauptbestandteile ein seltenes Erdelement der Gruppe IIIa, ausschließlich Ce und einschließlich Y, und ein Übergangselement, ausschließlich Cr, enthält, mit einem Zusatz von zumindest einem der Elemente Sn, Sb, W, Mo oder Te in einem Bereich von 0,01 bis 5 Mol-Prozent.

**3.** Halbleitende Keramik mit einem negativen Widerstandstemperaturkoeffizienten gemäß Anspruch 1 oder 2, bei der das Oxid ein Oxid ist, das aus $LaCoO_3$, $LaMnO_3$, $SmNiO_3$, $NdNiO_3$ und $PrNiO_3$ ausgewählt ist.

**4.** Halbleitende Keramik mit einem negativen Widerstandstemperaturkoeffizienten gemäß Anspruch 1 oder 2, bei der der Hauptkomponente 0,1 bis 5 Mol-Prozent des Zusatzstoffes zugesetzt sind.

**5.** Halbleitende Keramik mit einem negativen Widerstandstemperaturkoeffizienten gemäß Anspruch 3, bei der das Oxid aus $LaCoO_3$ $La_{0,9}Nd_{0,1}CoO_3$ ist.

**6.** Halbleitende Keramik mit einem negativen Widerstandstemperaturkoeffizienten gemäß Anspruch 3, bei der das Oxid aus $LaCoO_3$ $La_{0,9}Gd_{0,1}CoO_3$ ist.

**7.** Halbleitende Keramik mit einem negativen Widerstandstemperaturkoeffizienten gemäß Anspruch 3, bei der das Oxid aus $LaCoO_3$ $La_{0,99}Y_{0,01}CoO_3$ ist.

**8.** Halbleitende Keramik mit einem negativen Widerstandstemperaturkoeffizienten gemäß Anspruch 1 oder 2, das für ein Element zum Verhindern eines Stromstoßes verwendet ist.

**9.** Halbleitende Keramik mit einem negativen Widerstandstemperaturkoeffizienten gemäß Anspruch 1 oder 2, die als ein Element zum Verzögern eines Motorstartens verwendet ist.

**Revendications**

**1.** Céramique semi-conductrice à coefficient de résistance à la température négatif, composé principalement d'un oxyde qui contient, comme ingrédients principaux, un matériau des terres rares du groupe IIIa, à l'exclusion de Ce et incluant Y, et un élément de transition, à l'exclusion de Cr, avec addition d'au moins l'un parmi Si, Zr, Hf, Ta et Ce dans une plage de 0,001 à 5 pour cent en molécules-gramme.

**2.** Céramique semi-conductrice à coefficient de résistance à la température négatif, composé principalement d'un oxyde qui contient, comme ingrédients principaux, un matériau des terres rares du groupe IIIa, à l'exclusion de Ce et incluant Y, et un élément de transition, à l'exclusion de Cr, avec addition d'au moins l'un parmi Sn, Sb, W, Mo ou Te dans une plage de 0,001 à 5 pour cent en molécules-gramme.

**3.** Céramique semi-conductrice à coefficient de résistance à la température négatif suivant la revendication 1 ou 2, dans laquelle ledit oxyde est au moins l'un choisi parmi $LaCoO_3$, $LaMnO_3$, $SmNiO_3$, $NdNiO_3$ et $PrNiO_3$.

**4.** Céramique semi-conductrice à coefficient de résistance à la température négatif suivant la revendication 1 ou 2, dans laquelle il est ajouté audit composant principal de 0,1 à 5 pour cent en molécules-gramme dudit adjuvant.

**5.** Céramique semi-conductrice à coefficient de résistance à la température négatif suivant la revendication 3, dans laquelle ledit oxyde $LaCoO_3$ est $La_{0,9}Nd_{0,1}CoO_3$.

**6.** Céramique semi-conductrice à coefficient de résistance à la température négatif suivant la revendication 3, dans laquelle ledit oxyde $LaCoO_3$ est $La_{0,9}Gd_{0,1}CoO_3$.

**7.** Céramique semi-conductrice à coefficient de résistance à la température négatif suivant la revendication 3, dans laquelle ledit oxyde $LaCoO_3$ est $La_{0,99}Y_{0,01}CoO_3$.

**8.** Céramique semi-conductrice à coefficient de résistance à la température négatif suivant ]a revendication 1 ou 2, appliquée à un élément destiné à empêcher un courant violent.

**9.** Céramique semi-conductrice à coefficient de résistance à la température négatif suivant la revendication 1 ou 2, appliquée à un élément destiné à retarder le démarrage d'un moteur.

FIG. 1

# FIG. 2